# EUROPÄISCHE PATENTANMELDUNG

(11) **EP 1 936 540 A1**
(43) Veröffentlichungstag der Anmeldung: **25.06.2008**
(21) Anmeldenummer: 06026475.1
(22) Anmeldetag: 20.12.2006
(51) Int. Cl.: G06K 19/04, G06K 19/06

(54) **Tags zur Identifikation von Vorrichtungen, insbesondere von Turbinenschaufeln**

(71) Anmelder: SIEMENS AKTIENGESELLSCHAFT, 80333 München (DE)
(72) Erfinder: Bast, Ulrich, Dr., 81667 München (DE); Jabado, Rene, 14199 Berlin (DE); Dahl Jensen, Jens, Dr., 14050 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE); Walter, Steffen, Dr., 85667 Oberpframmern (DE)

(57) **Zusammenfassung**

Die vorliegende Erfindung betrifft eine Vorrichtung, insbesondere eine Turbinenschaufel (4), die unter extremen Umgebungsbedingungen verwendet wird. Es ist Aufgabe eine Vorrichtung derart zu kennzeichnen, dass Vorrichtungsinformationen, wie es beispielsweise Herstellungsdaten, Laufzeiten, Informationen zur Wiederaufbereitungen und dergleichen sind, ebenso nach Verwendung der Vorrichtung unter extremen Umgebungsbedingungen, datensicher und für Dritte unzugänglich auslesbar sind. Dazu wird ein Tag zur Speicherung von Vorrichtungsinformationen in die Vorrichtung integriert, wobei das Tag ebenso nach Aussetzen unter den extremen Umgebungsbedingungen auslesbar. Das Tag wird dazu auf der Grundlage von Keramiken hergestellt. Die Vorrichtungsdaten sind in Form eines Matrixcodes als Lochmuster in der Keramik verschlüsselt gespeichert. Auf die Weise können Vorrichtungen eindeutig identifiziert und eindeutig einem Hersteller zugeordnet werden. Ebenso können wichtige Informationen zu der Vorrichtung bzw. zu dem Produkt auf einfache Weise abgefragt werden.

## Beschreibung

Die vorliegende Erfindung betrifft eine Vorrichtung gemäß dem Oberbegriff des Hauptanspruchs und dazugehörige Herstellungsverfahren.

Die vorliegende Erfindung betrifft insbesondere Turbinenschaufeln für Gas- oder Dampfturbinen. An derartigen Turbinenschaufeln werden hohe Anforderungen bezüglich Hochtemperaturbeständigkeit des Grundwerkstoffs, dessen keramischen Beschichtungen sowie dessen individuellen Konstruktions- und Designmerkmalen gestellt. Die Entwicklungskosten insbesondere für die Materialanpassung für den Hochtemperaturbereich sind sehr hoch, sodass entsprechendes Know-how geschützt werden muss. Dass heißt, Informationen zu kostenintensiven Vorrichtungen, wie dies beispielsweise Turbinenschaufeln sind, müssen in der Vorrichtung derart integriert sein, dass die Vorrichtungsinformationen bzw. Produktinformationen für Dritte unzugänglich auslesbar sind. Zudem sollen Vorrichtungen wie dies beispielsweise Turbinenschaufeln sind, derart identifizierbar sein, dass der Hersteller eindeutig identifizierbar ist. Weitere Informationen zu den kostenintensiven Vorrichtungen können Herstellungsdaten, wie Herstellungszeit und/ oder Herstellungsort, Registriernummer bzw. Herstellungsnummer, Laufzeiten und Informationen zu Wiederaufbereitungen der Vorrichtungen sein. Da Vorrichtungen wie es Turbinenschaufeln sind, extremen Umgebungsbedingungen ausgesetzt sind, müssen Markierungen von Vorrichtungen bzw. Produkten derart robust sein, dass die abgespeicherten Informationen nach Aussetzen unter den extremen Umgebungsbedingungen weiterhin auslesbar sind. Extreme Umgebungsbedingungen sind beispielsweise hohe Temperaturen oder hohe Drücke. Die in Rede stehenden Vorrichtungen, wie sie beispielsweise Turbinenschaufeln sind, sollen vor Produktpiraterie und unerlaubtem Missbrauch durch Dritte geschützt werden.

Es ist Aufgabe der vorliegenden Erfindung ein technisches Produkt bzw. eine technische Vorrichtung, insbesondere eine Turbinenschaufel derart zu kennzeichnen, dass Produkt- bzw. Vorrichtungsinformationen, wie es beispielsweise Herstellungsdaten, Herstellungsnummern, Laufzeiten, Wiederaufbereitungsinformationen sind, ebenso nach Verwendung der Vorrichtung unter extremen Umgebungsbedingungen, datensicher und für Dritte unzugänglich auslesbar sind. Es soll eine eindeutige Zuordnung von hergestellten Vorrichtungen, wie sie beispielsweise Turbinenschaufeln sind, zum Hersteller ermöglicht werden, auf diese Weise soll eine Identifizierung von Produktpiraten hergestellten Vorrichtungen bzw. Produkten vereinfacht werden. Es soll eine eindeutige Klarstellung hinsichtlich Gewährleistungsansprüchen bei Schadensfällen geschaffen sein.

Die Aufgabe wird durch eine Vorrichtung gemäß dem Hauptanspruch und ein Herstellungsverfahren zu dieser Vorrichtung gemäß dem Nebenanspruch gelöst.

Es werden so genannte Tags verwendet, die für extreme Umgebungsbedingungen geeignet sind. Verwendet werden beispielsweise hoch temperaturbeständige Tags. Ein Tag ist als Markierung, Kennzeichen, Marke oder Etikett definiert. Integriert sein heißt eingegliedert sein. Das heißt, die Vorrichtung weißt das Tag derart auf, dass Vorrichtung und Tag eine Einheit ausbilden. Das integrierte Tag kann von außerhalb der Vorrichtung unsichtbar geschaffen sein und/oder es ist derart in die Vorrichtung eingebettet, dass ein unerlaubtes Entfernen unmöglich ist. Das integrierte Tag kann in der Vorrichtung eingegraben oder vergraben sein.

Weitere vorteilhafte Ausgestaltungen finden sich in den Unteransprüchen.

Gemäß einer vorteilhaften Ausgestaltung ist das Tag als ein als Chip ausgebildeter, keramische Folien aufweisender Mehrschichtstapel erzeugt. Ein keramischer Multilayerstack besteht aus Folien und kann in Form eines Chips in die Vorrichtung, insbesondere Turbinenschaufel, integriert sein. Das verwendete Material ist hochtemperaturbeständig und auch unter weiteren extremen Umgebungsbedingungen funktionsfähig.

Gemäß einer weiteren vorteilhaften Ausgestaltung weist der Chip einen Matrixcode in Form eines Lochmusters in dem Mehrschichtstapel auf. Damit enthält der Chip für die individuelle Kennzeichnung insbesondere einer Turbinenschaufel einen Matrixcode in Form eines als Matrix erzeugten Lochmusters. Dabei ist eine Zeile und Spalten aufweisende Matrix an bestimmten Koordinaten derart durchlöchert, dass durch eine bestimmte Anzahl und Anordnung von Lochstrukturen in Form von Löchern ein Lochmuster gebildet wird. Auf diese Weise ist der Hersteller der einzige Nutzer, der den Zugriff und die Möglichkeit besitzt, einen eingebauten Code zu entschlüsseln. Dritte können einen Chip lediglich mit sehr großem technischem Aufwand auslesen und entschlüsseln.

Gemäß einer weiteren vorteilhaften Ausgestaltung weisen die verwendeten keramischen Folien Al₂O₃, ZrO₂ oder CeO₂ auf. Diese Materialen sind besonders widerstandfähig gegenüber extremen Umgebungsbedingungen. Diese Stoffsysteme sind aufgrund ihrer thermischen Ausdehnung vorteilhaft, die der eines Nickel-Grundwerkstoffs einer Vorrichtung angenähert ist.

Gemäß einer weiteren vorteilhaften Ausgestaltung erzeugt das Lochmuster beim Auslesen derart einen binären Code, dass eine Lochstruktur in Form eines Loches eine binäre "1" und das nicht Vorhandensein eines Lochs eine binäre "0" bewirkt. Dass heißt, bei einem Auslesen entspricht der binäre Code einer "0" bei keiner Lochstruktur und einer "1" bei einer Lochstruktur.

Gemäß einer weiteren vorteilhaften Ausgestaltung weist die Matrix des Matrixcodes einen als Zugangsschlüssel dienenden ersten Bereich und einen die Vorrichtungsinformationen aufweisenden zweiten Bereich auf. Auf diese Weise können Dritte ohne Kenntnis des Schlüssels, die Vorrichtungsinformationen nicht auslesen. Dadurch, dass die Matrix in zwei Bereiche gegliedert ist, wird eine zweistufige Codierung erzeugt. Der erste Bereich stellt den Schlüssel der Matrix dar, und kann nur von einer dem Hersteller eigenen Software dechiffriert werden. Erst die Dechiffrierung des ersten Bereichs ermöglicht die Dechiffrierung des zweiten Bereichs, der letztendlich die relevanten technischen Vorrichtungsinformationen wie beispielsweise Registriernummer, Herstellungsdatum- und ort, Werkstofflegierung, Refurbishmentdaten, das heißt Daten zu Wiederaufbereitungen, usw. enthält.

Gemäß einer weiteren vorteilhaften Ausgestaltung sind die Tags mittels Ultraschall und geeigneter Software auslesbar. Dritte könne ohne die entsprechende Software die Tags bzw. die Chips nicht auslesen. Das Auslesen der in das Material der Vorrichtung eingeschmolzenen Chips erfolgt über die Ultraschall-Technik. Dichte Unterschiede zwischen dem Verbund aus Vorrichtungsmaterial, wie es beispielsweise Metall ist, und der Keramik erzeugen ein visuelles Bild des Chips und seines Matrixcodes, welches mittels entsprechender Software dechiffriert werden kann.

Gemäß einer weiteren vorteilhaften Ausgestaltung sind die extremen Umgebungsbedingungen beispielsweise hohe Temperaturen in Bereichen bis ca. 1500 °C, hohe Drücke bis ca. 200 bar, hohe Feuchte und/ oder chemisch oder physikalisch aggressive Medien.

Gemäß einer weiteren vorteilhaften Ausgestaltung sind die Produkt- bzw. Vorrichtungsinformationen Herstellungsdaten, wie es beispielsweise Herstellungsort und/ Herstellungszeit sind, spezifische Vorrichtungsverarbeitungsangaben, Herstellungsnummern, Materialangaben beziehungsweise Angaben zum Grundwerkstoff beziehungsweise über Legierungen, Angaben zu chemischen und/ oder physikalischen Belastungsgrenzen, Konstruktions- und Designmerkmale, Laufzeiten und/ oder Angaben zu Wiederaufbereitungen. Auf diese Weise können insbesondere Turbinenschaufeln anhand einer Herstellungsnummer identifiziert werden. Ein Tag ermöglicht die Aufnahme von Informationen über relevante Herstellungsdaten, Laufzeiten und Wiederaufbereitungsvorgänge (Refurbishment) sowie spezifische Produktverarbeitungen. Wiederaufbereitungen (Refurbishments) von Vorrichtungen, insbesondere von Turbinenschaufeln, sind beliebig durchführbar.

Gemäß einer weiteren vorteilhaften Ausgestaltung ist das Tag formschlüssig, für Dritte unerkennbar in die Vorrichtung derart eingebettet, dass das Tag lediglich unter Zerstörung der Vorrichtung wieder entfernbar ist. Der Chip ist formschlüssig und unerkennbar für Dritte in die Turbinenschaufel eingebracht und kann ohne die Turbinenschaufel dabei selbst zu zerstören nicht entfernt werden. Die Tags werden in die Turbinenschaufel derart eingebettet, dass sie von außen unerkannt bleiben oder ein unerlaubtes Entfernen unmöglich gemacht ist. Diese Eigenschaften werden dadurch bewirkt, dass der keramische Chip mit dem individuell eingebrachten Matrixcode während des Gießprozesses der Vorrichtung bzw. der Turbinenschaufeln, integriert beziehungsweise eingebracht wird. Gegossen werden insbesondere Metalle beispielsweise als Legierungen. Der integrierte Chip ist danach formschlüssig mit dem Grundwerkstoff verbunden und kann nicht zerstörungsfrei entfernt werden. Die Entfernung des Chips führt unweigerlich zur Zerstörung des Chips und der Turbinenschaufel bzw. der Vorrichtung. Aufgrund der Hochtemperaturen- bzw. Korrosionsstabilität von keramischen Chips, die mit einer Temperatur von 1800° C gesintert worden sind, ist es möglich, die Chips während des Herstellungsprozesses der Turbinenschaufeln, die im Betrieb Temperaturen von 1500° C ausgesetzt sind, in den metallischen Grundwerkstoff mit einzugießen. Ein Integrieren beziehungsweise Einbringen eines Tags in die Vorrichtung erfolgt während eines Gießprozesses zur Herstellung der Vorrichtung, die insbesondere eine Turbinenschaufel ist. Grundwerkstoff einer Vorrichtung oder Turbinenschaufel ist bevorzugt Nickel.

Gemäß einer weiteren vorteilhaften Ausgestaltung erfolgt ein Erzeugen eines Lochmusters mittels Stanzen von keramischen Grünfolien, die anschließend laminiert und bei Temperaturen zwischen 1600°C und 1800°C dicht gesintert werden.

Alternativ erfolgt ein Erzeugen eines Lochmusters mittels Laserbohrens oder chemischen Ätzens an bereits bei Temperaturen zwischen 1600°C und 1800°C dicht gesinterten keramischen Folien.

Gemäß einer weiteren vorteilhaften Ausgestaltung ist die Vorrichtung eine Turbinenschaufel, wobei das Tag im Fuß- oder Kopfbereich der Turbinenschaufel positioniert wird.

Die vorliegende Erfindung wird anhand eines Ausführungsbeispiels in Verbindung mit den Figuren näher beschrieben. Es zeigen:

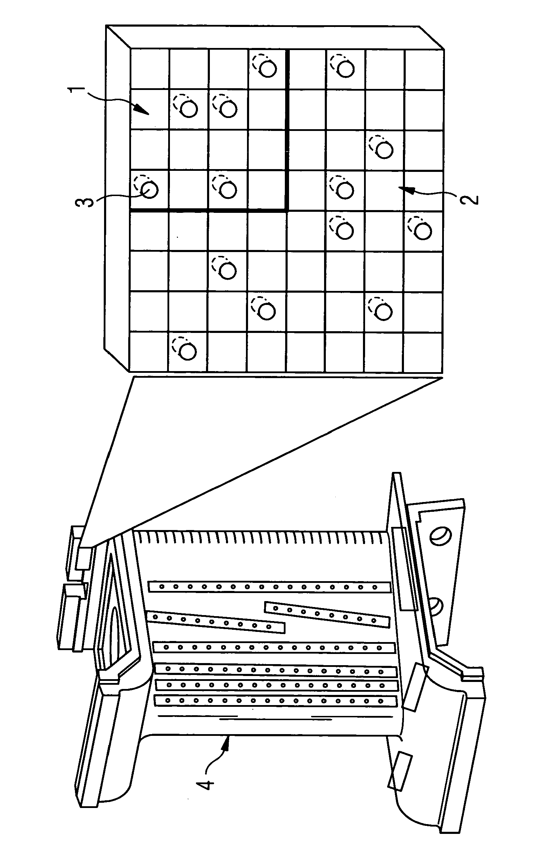

- Figur 1:: ein Ausführungsbeispiel eines Tags gemäß der vorliegenden Erfindung.

Figur 1 zeigt ein Ausführungsbeispiel eines Tags in einer Vorrichtung. Als Ausführungsbeispiel für eine Vorrichtung ist auf der linken Seite eine Turbinenschaufel 4 dargestellt, wobei das Tag im Kopfbereich der Turbinenschaufel 4 integriert ist. Eine Positionierung des Tags im Fußbereich der Turbinenschaufel 4 ist ebenso möglich. Figur 1 zeigt auf der rechten Seite ein keramisches Substrat, das in Form von keramischen Folien gebildet wird, die einen Mehrschichtstapel erzeugen. Das Substrat weist einen Matrixcode in Form eines Lochmusters auf. Ein Bereich 1 der Matrix stellt einen Zugangsschlüssel dar. Lediglich dessen Kenntnis ermöglicht die Dechiffrierung des Bereichs 2, welcher die Informationen der Turbinenschaufel 4 enthält. Das Substrat, bzw. der Mehrschichtstapel aus keramischen Folien, ist während des Gießprozesses in die Turbinenschaufel, und zwar bevorzugt im Kopf- oder Fußbereich, mit eingegossen worden. Auf diese Weise ist eine Lochstruktur 3 in Form eines Loches mit dem metallischen Grundwerkstoff gefüllt, so dass ein Dichteunterschied zur Keramik erzeugt wird. Auf die Weise wird ein Auslesen mit einem Ultraschallkopf ermöglicht. Die Vorrichtung sollte grundsätzlich vom Material des Tags abweichende Materialien aufweisen. Figur 1 zeigt auf der rechten Seite eine schematische Darstellung des keramischen Substrats mit entsprechendem Lochmuster, das den Matrixcode erzeugt. Bezugszeichen 3 kennzeichnet eine Lochstruktur 3 in Form eines Loches.

Die vorliegende Erfindung gilt für alle Vorrichtungen, die unter extremen Umgebungsbedingungen verwendet werden. Die beschriebenen Turbinenschaufeln sind beispielsweise in einer Gas- oder Dampfturbine eingebaut.

## Patentansprüche

1. Vorrichtung, insbesondere Turbinenschaufel (4), die unter extremen Umgebungsbedingungen verwendbar ist,
**dadurch gekennzeichnet, dass**
ein Tag zur Speicherung von Vorrichtungsinformationen in die Vorrichtung integriert ist, wobei das Tag ebenso nach Aussetzen unter den extremen Umgebungsbedingungen auslesbar ist.

2. Vorrichtung nach Anspruch 1,
**dadurch gekennzeichnet, dass**
das Tag ein Keramiksubstrat ist.

3. Vorrichtung nach Anspruch 1 oder 2,
**dadurch gekennzeichnet, dass**
das Tag ein keramische Folien aufweisender Mehrschichtstapel ist.

4. Vorrichtung nach Anspruch 1, 2 oder 3,
**dadurch gekennzeichnet, dass**
das Tag als Chip ausgebildet ist.

5. Vorrichtung nach einem oder mehreren der vorangehenden Ansprüche 1 bis 4,
**dadurch gekennzeichnet, dass**
das Tag einen Matrixcode in Form eines Lochmusters aufweist.

6. Vorrichtung nach einem oder mehreren der vorangehenden Ansprüche 2 bis 5,
**dadurch gekennzeichnet, dass**
das die Keramiken Al₂O₃, ZrO₂ oder CeO₂ aufweisen.

7. Vorrichtung nach Anspruch 5 oder 6,
**dadurch gekennzeichnet, dass**
das Lochmuster beim Auslesen derart einen binären Code erzeugt, dass eine Lochstruktur (3) eine binäre "1" und eine nicht vorhandene Lochstruktur (3) eine binäre "0" bewirkt.

8. Vorrichtung nach Anspruch 5, 6 oder 7,
**dadurch gekennzeichnet, dass**
die Matrix einen als Zugangsschlüssel dienenden ersten Bereich (1) und einen die Vorrichtungsinformationen aufweisenden zweiten Bereich (2) aufweist.

9. Vorrichtung nach einem oder mehreren der vorangehenden Ansprüche 1 bis 8,
**dadurch gekennzeichnet, dass**
das Tag mittels Ultraschall und geeigneter Software auslesbar ist.

10. Vorrichtung nach einem oder mehreren der vorangehenden Ansprüche 1 bis 9,
**dadurch gekennzeichnet, dass**
die extremen Umgebungsbedingungen hohe Temperaturen bis circa 1500°C, hohe Drücke bis circa 200bar, hohe Feuchte und/oder chemisch oder physikalisch aggressive Medien sind.

11. Vorrichtung nach einem oder mehreren der vorangehenden Ansprüche 1 bis 10,
**dadurch gekennzeichnet, dass**
die Vorrichtungsinformationen Herstellungsdaten, Herstellungsort, Herstellungszeit, spezifische Vorrichtungsverarbeitungen, Herstellungsnummer, Materialangaben, Angaben zu chemischen und/oder physikalischen Belastbarkeiten, Konstruktions-und Designmerkmale, Laufzeiten und/oder Angaben zu Wiederaufbereitungen sind.

12. Vorrichtung nach einem oder mehreren der vorangehenden Ansprüche 1 bis 11,
**dadurch gekennzeichnet, dass**
das Tag formschlüssig, für Dritte unerkennbar in die Vorrichtung derart eingebettet ist, dass das Tag lediglich unter Zerstörung der Vorrichtung wieder entfernbar ist.

13. Verfahren zur Herstellung einer Vorrichtung nach einem oder mehreren der vorangehenden Ansprüche 1 bis 12,
**gekennzeichnet durch**
Integrieren des Tags in die Vorrichtung während eines Gießprozesses zur Herstellung der Vorrichtung.

14. Verfahren zur Herstellung einer Vorrichtung nach Anspruch 13 in Verbindung mit den Ansprüchen 5 bis 12,
**gekennzeichnet durch**
Erzeugen des Lochmusters mittels Stanzen von keramischen Grünfolien, die anschließend laminiert und bei Temperaturen zwischen 1600°C und 1800°C dicht gesintert werden.

15. Verfahren zur Herstellung einer Vorrichtung nach Anspruch 13 in Verbindung mit den Ansprüchen 5 bis 12,
**gekennzeichnet durch**
Erzeugen des Lochmusters mittels Laserbohrens oder chemischen Ätzens an bereits bei Temperaturen zwischen 1600°C und 1800°C dicht gesinterten keramischen Folien.

16. Verfahren zur Herstellung einer Vorrichtung nach Anspruch 13, 14 oder 15,
**dadurch gekennzeichnet, dass**
die Vorrichtung eine Turbinenschaufel (4), insbesondere Gas-oder Dampfturbinenschaufel, ist und das Tag im Fuß- oder Kopfbereich der Turbinenschaufel (4) positioniert wird.
